# EUROPEAN PATENT APPLICATION

(11) **EP 3 896 559 A1**
(43) Date of publication of application: **20.10.2021**
(21) Application number: 21167292.8
(22) Date of filing: 07.04.2021
(51) Int. Cl.: G06F 3/0481, G06F 3/0488

(54) **SYSTEMS AND METHODS PROVIDING VISUAL AFFORDANCES FOR HUMAN-MACHINE INTERFACES**

(30) Priority: 16.04.2020 US 202016850228
(71) Applicant: HONEYWELL INTERNATIONAL INC., Charlotte, NC 28202 (US)
(72) Inventor: BOUDA, TOMAS, Charlotte, NC 28202 (US); BADIN, Pavel, Charlotte, NC 28202 (US); CHALAS, Igor, Charlotte, NC 28202 (US); SOLC, Marek, Charlotte, NC 28202 (US)
(74) Representative: Lucas, Peter Lawrence

(57) **Abstract**

Methods, systems, and aircraft systems providing visual affordances for human-machine interfaces are described. The system includes a controller architecture coupled to touch screen device. The controller architecture receives a configuration file (config file) for a control element, parses it to identify a force functionality component and force threshold therein. The controller renders the control element on a graphical user interface (GUI) on the touch screen device using a visual representation of the force functionality component of the control element in accordance with a selected format scheme. The controller modifies the visual representation of the control element as a function of a pressure of a user's touch on the control element on the GUI, also in accordance with the selected format scheme.

## Description

### TECHNICAL FIELD

The following disclosure relates generally to human-machine interfaces and, more particularly, to aircraft systems and methods providing visual affordances for human-machine interfaces.

### BACKGROUND

A type of human-machine interface that is sometimes used in the cockpit of an aircraft is a touch screen employing a graphical user interface. A touch screen can generally bring significant benefits to the pilot with respect to usability, performance and satisfaction. There are different kinds of touch screens, such as resistive and capacitive. In a cockpit, capacitive touch screen displays, which provide a similar experience to that of a standard display of mobile phones and tablets, have been displacing resistive touch screen displays.

Although aircraft systems with capacitive touch screens can bring many benefits, they also present objective technical problems. For example, capacitive touch screens may not be able to distinguish or prevent unwanted accidental touches to buttons, which might adversely impact safety and performance. "Force touch functionality," in which a pilot must use a specific level of force to trigger the action associated with a control element (e.g. if the control element is a button and the pilot must push the control button with a specific amount of force) emerged as a possible solution for these accidental touches. However, for a variety of reasons, a pilot may be unaware of the force functionality associated with a control element. A technical problem is encountered when a pilot is unclear as to all of the properties and uses of control elements on a human-machine interface he is to interact with.

Accordingly, technologically improved human-machine interfaces continue to be desirable. In particular, aircraft systems and methods providing visual affordances for control elements on human-machine interfaces are desirable. Furthermore, other desirable features and characteristics of the present invention will be apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In an embodiment, a system for providing a human-machine interface is provided. The system includes: an input interface; a display device; a controller architecture coupled to the input interface and display device, the controller architecture configured to: receive a configuration file (config file) for a control element; parse the config file to identify a force functionality component therein; match the force functionality component of the control element with a visual representation in accordance with a selected format scheme; render the control element on a graphical user interface (GUI) on the display device using the matched visual representation; receive a pressure signal representing a user's touch on the control element on the GUI; and modify the visual representation of the control element as a function of the pressure signal.

In another embodiment, a method for providing a human-machine interface is provided. The method includes: at a controller architecture: receiving a configuration file (config file) for a control element; parsing the config file to identify a force functionality component therein; matching the force functionality component of the control element with a visual representation in accordance with a selected format scheme; rendering the control element on a graphical user interface (GUI) using the matched visual representation; receiving a pressure signal representing a user's touch on the control element on the GUI; and modifying the visual representation of the control element as a function of the pressure signal.

An embodiment of an aircraft system is provided. The aircraft system includes: a touch screen display; and a controller architecture coupled to the touch screen display and programmed to: receive a configuration file (config file) for a control element; parse the config file to identify a force functionality component therein; match the force functionality component of the control element with a visual representation in accordance with a pre-programmed format scheme; render the control element on a graphical user interface (GUI) on the display device using the matched visual representation; receive a pressure signal representing a user's touch on the control element on the GUI; and modify the visual representation of the control element as a function of the pressure signal and a pre-programmed progress technique.

Furthermore, other desirable features and characteristics of the system and method will become apparent from the subsequent detailed description and the appended claims, taken in conjunction with the accompanying drawings and the preceding background.

### BRIEF DESCRIPTION OF THE DRAWINGS

At least one example of the present invention will hereinafter be described in conjunction with the following figures, wherein like numerals denote like elements, and:
FIG. 1 is a block diagram of an aircraft system, which generates visual affordances for control elements on touch screen devices, as illustrated in accordance with an exemplary embodiment of the present disclosure;
FIG. 2 is a flow chart of a method for visual affordances on touch screen devices, as may be implemented by the aircraft system of FIG. 1, in accordance with an exemplary embodiment of the present disclosure; and
FIG. 3 depicts various visual affordances that may be presented on touch screen devices, in accordance with an exemplary embodiment of the present disclosure.

### DETAILED DESCRIPTION

The following Detailed Description is merely exemplary in nature and is not intended to limit the invention or the application and uses of the invention. The term "exemplary," as appearing throughout this document, is synonymous with the term "example" and is utilized repeatedly below to emphasize that the description appearing in the following section merely provides multiple non-limiting examples of the invention and should not be construed to restrict the scope of the invention, as set-out in the Claims, in any respect. As further appearing herein, the term "pilot" encompasses all users of the below-described aircraft system.

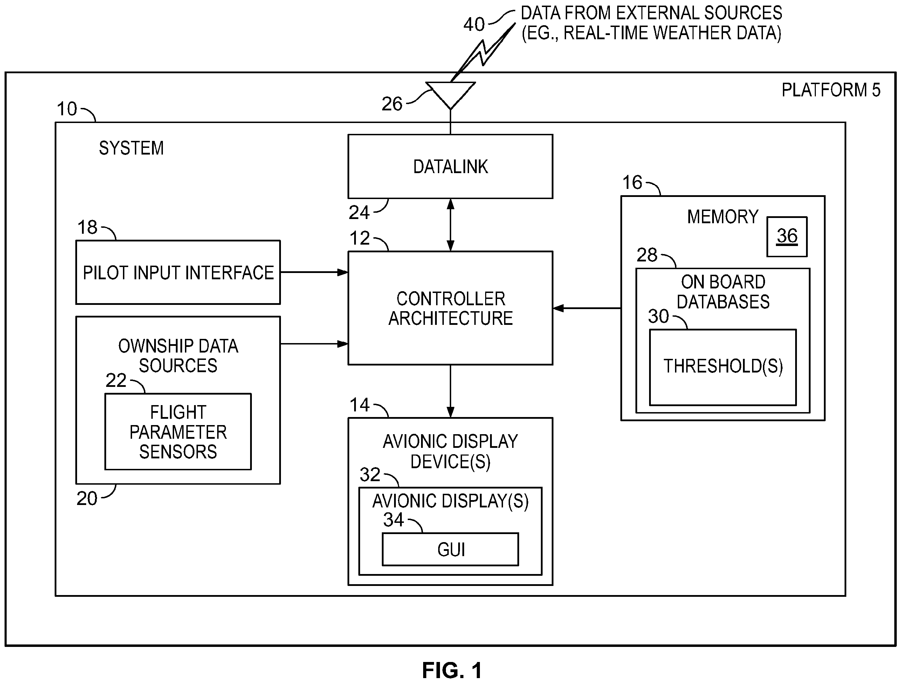

As mentioned, unbeknownst to a pilot, one or more of the control buttons rendered on a graphical user interface (GUI) on a touch screen device may be associated with control elements that have "force functionality," i.e., the functionality that they trigger may be a function of detected pressure on the button. A technical problem is encountered when a pilot is unclear as to the properties and uses of control elements, including understanding which ones have associated force functionality. The herein described aircraft systems and methods provide visual affordances for control elements on GUIs, enabling an objectively improved human-machine interface. An overarching description of an exemplary aircraft system suitable for generating visual affordances for human-machine interfaces will now be described in conjunction with FIG. 1.

FIG. 1 is a block diagram of an aircraft system **10,** as illustrated in accordance with an exemplary and non-limiting embodiment of the present disclosure. Aircraft system **10** may be utilized onboard a mobile platform to provide visual affordances for capacitive touch screen displays. In various embodiments, the mobile platform is an aircraft A/C **5,** which carries or is equipped with aircraft system **10.** As schematically depicted in FIG. 1, aircraft system **10** includes the following components or subsystems, each of which may assume the form of a single device or multiple interconnected devices: a controller architecture **12,** at least one avionic display device **14,** computer-readable storage media or memory **16,** an input interface **18,** ownship data sources **20** including, for example, an array of flight parameter sensors **22.** The aircraft system **10** may be separate from or integrated within: a flight management system (FMS) and/or a flight control system (FCS). Aircraft system **10** may also contain a datalink subsystem **24** including an antenna **26,** which may wirelessly transmit data to and receive data **(40)** from various sources external to system **10,** such as a cloud-based weather (WX) forecasting service of the type discussed below.

Although schematically illustrated in FIG. 1 as a single unit, the individual elements and components of aircraft system **10** can be implemented in a distributed manner utilizing any practical number of physically distinct and operatively interconnected pieces of hardware or equipment. When aircraft system **10** is utilized as described herein, the various components of aircraft system **10** will typically all be located onboard the A/C.

The term "controller architecture," as appearing herein, broadly encompasses those components utilized to carry-out or otherwise support the processing functionalities of aircraft system **10.** Accordingly, controller architecture **12** can encompass or may be associated with any number of individual processors, flight control computers, navigational equipment pieces, computer-readable memories (including or in addition to memory **16),** power supplies, storage devices, interface cards, and other standardized components. In various embodiments, controller architecture **12** includes or cooperates with at least one firmware and software program (generally, computer-readable instructions that embody an algorithm) for carrying-out the various process tasks, calculations, and control/display functions described herein. During operation, the controller architecture **12** may be programmed with and execute the at least one firmware or software program, for example, program **36,** that embodies a visual affordances algorithm, to thereby perform the various process steps, tasks, calculations, and control/display functions described herein.

Controller architecture **12** may exchange data **40** with one or more external sources to support operation of aircraft system **10** in embodiments. In this case, bidirectional wireless data exchange may occur over a communications network, such as a public or private network implemented in accordance with Transmission Control Protocol/Internet Protocol architectures or other conventional protocol standards. Encryption and mutual authentication techniques may be applied, as appropriate, to ensure data security.

Memory **16** can encompass any number and type of storage media suitable for storing computer-readable code or instructions, such as the aforementioned software program, as well as other data generally supporting the operation of aircraft system 10. In certain embodiments, memory **16** may contain one or more databases **28,** such as geographical (terrain), airport, runway, navigational, and historical weather databases, which may be updated on a periodic or iterative basis to ensure data timeliness. The databases maintained in memory **16** may be shared by other systems onboard the A/C carrying aircraft system **10,** such as an Enhanced Ground Proximity Warning System (EGPWS) or a Runway Awareness and Advisory System (RAAS). Memory **16** may also store one or more threshold values, generically represented by box **30,** for use by an algorithm embodied in software program **36.**

Flight parameter sensors **22** supply various types of data or measurements to controller architecture **12** during A/C flight. In various embodiments, flight parameter sensors **22** provide data and measurements from a Full Authority Digital Engine Control (FADEC), such data or measurements may include engine status (e.g., an engine-out (EO) condition signal) and fuel flow to the engine. In A/C not having a FADEC, engine status and fuel flow may be determined based on monitored generator current in the engine.

In various embodiments, the flight parameter sensors **22** may also supply, without limitation, one or more of: remaining battery time, inertial reference system measurements, Flight Path Angle (FPA) measurements, airspeed data, groundspeed data, altitude data, attitude data including pitch data and roll measurements, yaw data, data related to A/C weight, time/date information, heading information, data related to atmospheric conditions, flight path data, flight track data, radar altitude data, geometric altitude data, wind speed and direction data. Further, in certain embodiments of system **10,** controller architecture **12** and the other components of aircraft system **10** may be included within or cooperate with any number and type of systems commonly deployed onboard A/C including, for example, an FMS, an Attitude Heading Reference System (AHRS), an Instrument Landing System (ILS), and/or an Inertial Reference System (IRS), to list but a few examples.

With continued reference to FIG. 1, display device **14** (or devices **14)** can include any number and type of image generating devices on which one or more avionic displays may be produced. When aircraft system **10** is utilized to construct flight plans for a manned A/C, display device **14** may be affixed to the static structure of the A/C cockpit as, for example, a Head Down Display (HDD) or Head Up Display (HUD) unit. Alternatively, display device **14** may assume the form of a movable display device (e.g., a pilot-worn display device) or a portable display device, such as an Electronic Flight Bag (EFB), a laptop, or a tablet computer carried into the A/C cockpit by a pilot.

At least one avionic display **32** is generated on display device **14** during operation of aircraft system **10;** the term "avionic display" defined as synonymous with the term "aircraft-related display" and "cockpit display" and encompasses displays generated in textual, graphical, cartographical, and other formats. The avionic displays **32** generated and controlled by aircraft system **10** can include alphanumerical input displays of the type commonly presented on the screens of MCDUs, as well as Control Display Units (CDUs) generally. The aircraft system **10** can also generate various types of lateral and vertical avionic displays **32** on which symbology, text annunciations, and other graphics pertaining to flight planning are presented for a pilot to view. Specifically, embodiments of avionic displays **32** include one or more two dimensional (2D) avionic displays, such as a horizontal or vertical navigation display; and/or on one or more three dimensional (3D) avionic displays, such as a Primary Flight Display (PFD) or an exocentric 3D avionic display.

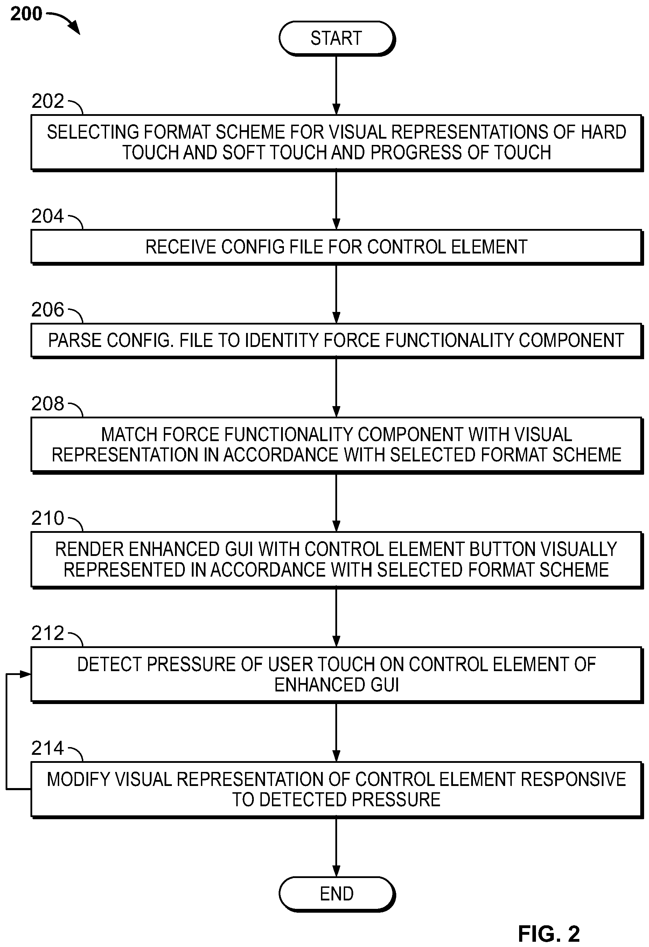

In various embodiments, a human-machine interface, such as the above described touch screen display, is implemented as an integration of the pilot input interface **18** and a graphical user interface (GUI) **34** rendered on a display device **14.** Via various display and graphics systems processes, the controller architecture **12** may command and control the touch screen display causing the GUI **34** to render a variety of graphical user interface (GUI) objects or elements, for example, buttons, sliders, and the like, which are used to prompt a user to interact with the human-machine interface to provide user input, and to activate respective functions and provide user feedback, responsive to received user input at the GUI element. As mentioned, many of the objects and buttons displayed are control elements, used to identify control functions, and some of those control elements have force functionality. The pilot input interface **18/**GUI **34** combination, implemented as a touch screen display, comprises circuitry for detecting pressure on a control element and sending a representative pressure signal to the controller architecture **12.** The controller architecture **12** uses the pressure signal to modify the renderings of control elements on the GUI **34,** as described in more detail in connection with FIG. 2.

Turning now to FIG. 2, the aircraft system **10** described above may be implemented by a processor-executable method **200** providing visual affordances for human-machine interfaces. For illustrative purposes, the following description of method **200** may refer to elements mentioned above in connection with FIG. 1. In practice, portions of method **200** may be performed by different components of the described system. It should be appreciated that method **200** may include any number of additional or alternative tasks, the tasks shown in FIG. 2 need not be performed in the illustrated order, and method **200** may be incorporated into a more comprehensive procedure or method having additional functionality not described in detail herein. Moreover, one or more of the tasks shown in FIG. 2 could be omitted from an embodiment of the method **200** as long as the intended overall functionality remains intact.

A format scheme is selected at **202.** In some embodiments, **at 202,** the controller architecture **12** first prompts a user to select a format scheme from among a plurality of available format schemes before receiving the format scheme selection. In some embodiments, the controller architecture **12** implements a pre-programmed format scheme selection at **202.**

In the provided examples, control elements have two states for force touch functionality, those two states being that they require either a hard touch or a soft touch. Accordingly, in the provided examples, a format scheme includes a visual representation for two states: a visual representation for a hard touch and a visual representation for a soft touch; as may be appreciated, these two visual representations are distinct and readily distinguishable from each other. In other embodiments, the control elements may have more than two states, and in those embodiments, the format scheme will have a respective number of visual representations. Note that the definition of a hard touch and a soft touch is understood to be arbitrarily set prior to engagement of the present aircraft system **10;** as used herein, a configuration file (shortened to "config file" in some references) is a piece of code, text, application configuration file or GUI configuration file that assigns a control element to a state for force touch functionality; i.e., in the provided embodiments, the config file defines the control element as being in the hard touch category or in the soft touch category. The configuration file may be received and parsed by the control element as well as by the Integrated Development Environment, by the SW development tool or by the target SW Application.

The visual representation of the force touch functionality may be dependent on the target platform. If the touch screen display does not support force sensing functionality, the GUI may not be modified. If the touch screen supports force sensing functionality, visual representation of soft and hard touch functionality of control elements may be presented on the screen. This approach allows the SW developer to use same source code for touch screens with or without support of force sensing functionality.

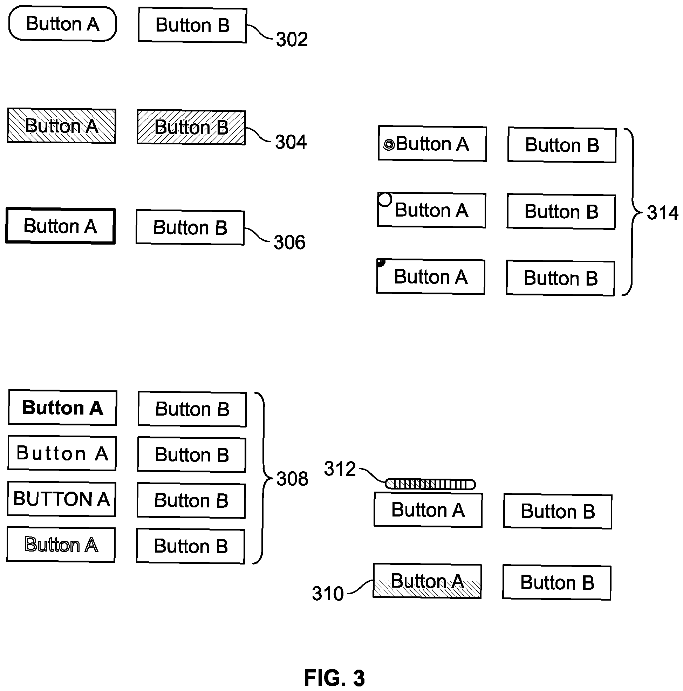

In some embodiments, the selected format scheme further includes an animated progress technique for visually distinguishing a target control element by a progress of detected touch pressure on the target control element. The controller architecture 12 utilizes the progress technique to render an animated progress indicator in a manner that suggests progress is incomplete until the pressure signal for the associated target control element meets a pre-programmed force threshold; after which the progress indicator changes to indicate that progress is complete, and the system determines that the target control element is selected. Table 1, below, provides some non-limiting examples of format schemes that may be used. FIG. 3 depicts some of the non-limiting examples of format schemes in Table 1. The described progress techniques can be mixed and matched with different hard touch and soft touch format schemes.

**Table 1.**

| Format Scheme | Hard Touch (Button A) | Soft Touch (Button B) | Progress animation |
|---|---|---|---|
| 1 (FIG. 3, **302)** | A first button shape | A second, different, button shape | |
| 2 (FIG. 3, **306)** | a visually distinguishable border color (different from a fill color of element) used on border of element | Same fill color for element, no border on element | Vary intensity of color of the element from low to high as a function of detected low to high pressure (FIG. 3, **310)** |
| 3 (FIG. 3, **304)** | A first color for element | A second, different, color for element | Render a tape alongside the element and Vary a color of the tape from a first to a second, as a function of detected low to high pressure (FIG. 3, **312**) |
| 4 (FIG. 3, **308)** | A first font type | A second font type | Animate/Vary intensity of color of the element from low to high as a function of detected low to high pressure |
| 5 (FIG. 3, **314)** | A specific icon displayed on element, such as a target or dot | Not using the icon on soft touch elements | Render a tape alongside the element and animate/Vary a color of the tape from a first to a second, as a function of detected low to high pressure |
| 6 | Animate an icon on the element when the element is touched | Not rendering the icon | |

At **204,** a config file for a control element is received. The aircraft system **10** reads the configuration file for the control element and parses the config file to identify a force functionality component therein at **206.** In various embodiments, the force functionality component is understood to identify the control element on the GUI as one for hard touch or soft touch. In various embodiments using a progress technique, at **206,** the controller architecture **12** also parses the config file to identify a pre-programmed force threshold that will be used for indicating progress. While, for simplicity, the example is for a single control element, it is understood that in various embodiments, at **204,** a plurality of config files are received for a plurality of different respective control elements for a given GUI or human-machine interface; and further, that at **206,** each of the config files are individually parsed to identify a respective force functionality component and force threshold.

At **208,** the identified force functionality component is matched to a visual representation in accordance with the selected format scheme from **202** above. In practice this means that if control element 1 is a soft touch force functionality, it is matched to a visual button representation of soft touch force functionality. Additionally, if progress techniques are used, at **208** a control element may have an associated tape rendered alongside the control element.

For example, as shown in FIG. 3, **304,** a format scheme may employ a first color for a hard touch control element (Button A) and a second color, different than the first color, for a soft touch control element (Button B). Further, the format scheme may include a progress technique **312,** of rendering a tape alongside the control element, for example, the tape being rendered initially in color 1.

In embodiments in which there are a plurality of identified force functionalities at **206,** at **208** each of the plurality of identified force functionalities is matched to a visual representation in accordance with the selected format scheme from **202** above.

At **210** the system **10** generates an enhanced GUI or human-machine interface, rendering the control element using a visual representation that is in accordance with the selected format scheme. In practice this means that the above example of control element 1 being a soft touch force functionality, it is rendered in the color, border, font, etc., that the selected theme prescribes for control elements with soft touch force functionality. Thus, the system **10** provides a visual affordance for the control element on a human-machine interface. In various embodiments, **at 210,** the enhanced GUI renders a plurality of different control elements, each of which is rendered using a visual representation that is in accordance with the selected format scheme. In this manner, a plurality of different control elements may be rendered on the enhanced GUI, each with a visual representation that is in accordance with the selected format scheme; i.e., each rendered with a visual affordance for the force functionality of the respective control element.

At **212,** the pressure of a user touch on the control element on the enhanced GUI is detected and converted into a corresponding pressure signal. The controller architecture **12** receives the pressure signal for the control element, and at **214,** the controller architecture **12** modifies the visual representation of the control element responsive to the pressure signal and the pre-programmed force threshold. The controller architecture **12** renders the progress button in a manner that suggests incomplete until the pressure signal meets the pre-programmed force threshold. Depending on the type of force functionality attributed to the control element in the config file, the system **10** may cycle between **214** and **212** before ending.

In an embodiment, at **212,** the controller architecture **12** modifies the visual representation of the control element by varying a color of the tape from color 1 to color 2, responsive to the received pressure signal associated with the control element or button. E.g., the received pressure signal varies from low pressure to high pressure, and the system or method compares the received pressure signal to the force threshold from the config file for the control element; the system or method varies the color of the tape associated with the control element from the color 1 to the color 2 (for example, from left to right or top to bottom) as a function of the received pressure signal, and when the received pressure signal meets or exceeds the force threshold, the system or method determines that the control element has been selected, and the tape is rendered completely in color 2.

Although an exemplary embodiment of the present disclosure has been described above in the context of a fully-functioning computer system (e.g., aircraft system **10** described above in conjunction with FIG. 1), those skilled in the art will recognize that the mechanisms of the present disclosure are capable of being distributed as a program product (e.g., an Internet-disseminated program or software application) and, further, that the present teachings apply to the program product regardless of the particular type of computer-readable media (e.g., hard drive, memory card, optical disc, etc.) employed to carry-out its distribution. In certain implementations, the aircraft system may include GUI components, such as ARINC 661 components, which may include a User Application Definition File ("UADF"). As will be appreciated by one skilled in the art, such a UADF is loaded into the flight guidance system and defines the "look and feel" of the display, the menu structure hierarchy, and various other static components of the GUI with which a pilot or other user interacts.

Terms such as "comprise," "include," "have," and variations thereof are utilized herein to denote non-exclusive inclusions. Such terms may thus be utilized in describing processes, articles, apparatuses, and the like that include one or more named steps or elements but may further include additional unnamed steps or elements. While at least one exemplary embodiment has been presented in the foregoing Detailed Description, it should be appreciated that a vast number of variations exist. It should also be appreciated that the exemplary embodiment or exemplary embodiments are only examples, and are not intended to limit the scope, applicability, or configuration of the invention in any way. Rather, the foregoing Detailed Description will provide those skilled in the art with a convenient road map for implementing an exemplary embodiment of the invention. Various changes may be made in the function and arrangement of elements described in an exemplary embodiment without departing from the scope of the invention as set-forth in the appended Claims.

## Claims

1. A system for providing a human-machine interface, the system comprising:
an input interface;
a display device;
a controller architecture coupled to the input interface and display device, the controller architecture configured to:
receive a configuration file (config file) for a control element;
parse the config file to identify a force functionality component therein;
match the force functionality component of the control element with a visual representation in accordance with a selected format scheme;
render the control element on a graphical user interface (GUI) on the display device using the matched visual representation;
receive a pressure signal representing a user's touch on the control element on the GUI; and
modify the visual representation of the control element as a function of the pressure signal.

2. The system of claim 1, wherein the force functionality component is a hard touch or a soft touch, and wherein the controller architecture is further configured to prompt the user to select the format scheme from among a plurality of available format schemes.

3. The system of claim 1 wherein the force functionality component is a hard touch or a soft touch, and wherein the selected format scheme is pre-programmed, and the selected format scheme has a first color for a hard touch button and a second color, different than the first color, for a soft touch button.

4. The system of claim 3, wherein the selected format scheme includes a progress technique and the controller architecture is further configured to:
parse the config file to identify a related force threshold therein;
receive a pressure signal for the control element;
render a tape alongside the control element; and
vary the color of the tape from a first color to a second color, responsive to the received pressure signal.

5. The system of claim 2, wherein the controller architecture is further configured to modify the visual representation of the control element further as a function of the progress technique and force threshold.

6. The system of claim 1, wherein the config file is one of a plurality of config files for different control elements, and wherein the controller architecture is further configured to parse each config file to identify a respective force functionality component therein.

7. The system of claim 6, wherein the controller architecture is further configured to, for each identified force functionality, match it to a visual representation in accordance with the selected format scheme.

8. The system of claim 7, wherein the controller architecture is further configured to, for each of the different control elements, render the control element on the GUI with a visual representation that is in accordance with the selected format scheme.

9. A method for providing a human-machine interface, the method comprising:
at a controller architecture:
receiving a configuration file (config file) for a control element;
parsing the config file to identify a force functionality component therein;
matching the force functionality component of the control element with a visual representation in accordance with a selected format scheme;
rendering the control element on a graphical user interface (GUI) using the matched visual representation;
receiving a pressure signal representing a user's touch on the control element on the GUI; and
modifying the visual representation of the control element as a function of the pressure signal.

10. The method of claim 9, further comprising prompting the user to select the format scheme from among a plurality of available format schemes.

11. The method of claim 9, further comprising implementing a pre-programmed format scheme.

12. The method of claim 9, wherein the selected format scheme includes a progress technique and further comprising parsing the config file to identify the force threshold therein.

13. The method of claim 12, further comprising modifying the visual representation of the control element further as a function of the progress technique and force threshold.

14. The method of claim 9, wherein the config file is one of a plurality of config files for different control elements, and further comprising parsing each config file to identify a respective force functionality component therein.

15. The method of claim 14, further comprising:
matching each identified force functionality to a visual representation in accordance with the selected format scheme; and
for each of the different control elements, rendering the control element on the GUI with a visual representation that is in accordance with the selected format scheme.
